**Europäisches Patentamt**

**European Patent Office**

**Office européen des brevets**

(19)

(11) Publication number: **0 068 711**
A2

# (12) EUROPEAN PATENT APPLICATION

(21) Application number: 82303101.8

(22) Date of filing: 15.06.82

(51) Int. Cl.³: **F 16 K 27/00**

(30) Priority: 24.06.81 US 277066

(43) Date of publication of application: 05.01.83
Bulletin 83/1

(84) Designated Contracting States: **AT BE CH DE FR GB IT LI LU NL SE**

(71) Applicant: **SMITH VALVE CORPORATION, 125 Fisher Street, Westboro Massachusetts 01581 (US)**

(72) Inventor: **Harding, Bruce L., 33 Anthony Drive, Holden Massachusetts 01520 (US)**

(74) Representative: **Pratt, David Martin et al, Brookes & Martin High Holborn House 52/54 High Holborn, London. WC1V 6SE (GB)**

(54) **Male-ended valve.**

(57) A valve has a body (10) provided with a male extension (12). The male extension (12) has a pilot ring (16) protruding axially from the end thereof. The pilot ring (16) is adapted for insertion into an opening (24) in a fluid conduit (26) to which the male extension (12) is to be attached by welding. The male extension (12) is provided with an outer frustoconical face (18) leading from a juncture (20) with the pilot ring (16) to an enlarged portion (22) of the male extension (12). Said enlarged portion (22) has an outer diameter greater than that of the pilot ring (16). The pilot ring (16) is provided with an external formation (32, 38 or 40) which is engageable with the fluid conduit (26) to limit the permissible extent of insertion of the pilot ring (16) into the fluid conduit opening (24). The arrangement of the formation (32, 38 or 40) in relation to the frustoconical face (18) is such as to ensure that the juncture (20) always remains adequately spaced from the fluid conduit (26), thus ensuring that the width at the root (30) of the weld (28) is also adequate.

## MALE-ENDED VALVE

- 1 -

This invention relates to a valve, and in particular to a male-ended valve of the type adapted to be welded to a fluid conduit.

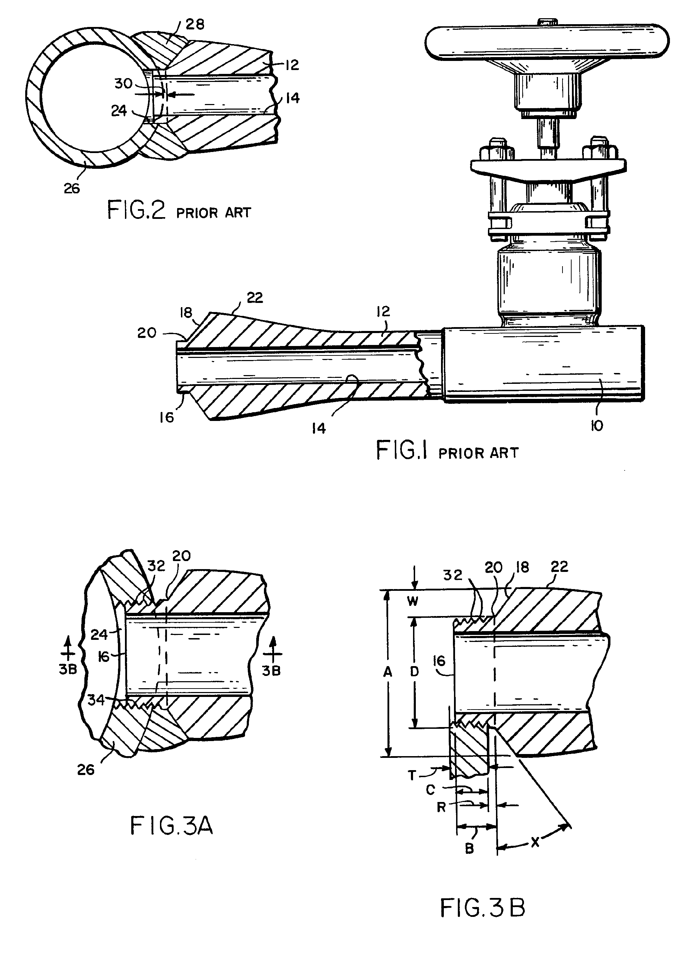

A conventional prior art male-ended valve is shown in Figs. 1 and 2 of the accompanying drawings; Fig. 1 being a part-sectional side elevation of the prior art valve, and Fig. 2 being an enlarged sectional view showing the joint produced by welding the male extension of the prior art valve to a fluid conduit. As shown in Fig. 1, the valve includes a body 10 with an integral male extension 12. An axial bore 14 extends through the male extension 12 and leads to a valve chamber (not shown). A cylindrical pilot ring 16 protrudes axially from the end of the male extension 12. The male extension 12 is further provided with an outer frustoconical face 18, which extends from a juncture 20 with the pilot ring 16 to an enlarged portion 22 having an outer diameter which is greater than that of the pilot ring.

As can be seen in Fig. 2, the pilot ring 16 is adapted for insertion into an opening 24 in a fluid conduit 26. The pilot ring 16 serves to locate and temporarily support the valve while the male extension 12 is being permanently attached to the fluid conduit by means of a weld 28.

The purpose of the enlarged portion 22 and the frustoconical face 18 is to accommodate a weld 28 with sufficient depth to provide the necessary strength at the joint. However, in order to produce a satisfactory weld, a minimum weld root 30 must be provided between the outer surface of the fluid conduit 26 and the juncture 20 of the pilot ring 16 with the frustoconical face 18. Without this minimum weld root 30, the molten metal generated during welding may not completely fill the base of the weld 28. To provide a minimum weld root 30 at the narrowest point with this conventional valve design, the welder must perform the welding operation while he holds the valve in place with the pilot ring 16 pulled slightly out of the opening 24. This is an awkward procedure which welders often neglect to follow, thus resulting in inferior welds.

The aim of the invention is to provide a male-ended valve with means for reliably and consistently limiting the permissible extent of insertion of its pilot ring into an opening of a fluid conduit, thereby ensuring that an adequate minimum weld root is provided without requiring the welder to hold the valve in a particular position during the welding operation.

The present invention provides a valve comprising a body having a male extension with a pilot ring protruding axially from the end thereof, the pilot ring being adapted for insertion into an opening in a fluid conduit to which the male extension is to be attached by welding, and the male extension being provided with an outer frustoconical face leading from a juncture with the pilot ring to an enlarged portion of the male extension, said enlarged portion having an outer diameter greater than that of the pilot ring, characterised in that the pilot ring is provided with means for limiting the permissible extent of insertion thereof into the fluid conduit opening, said means being so arranged in relation to the frustoconical face as to ensure that the juncture is spaced axially from the fluid conduit when the pilot ring is inserted into the fluid conduit opening.

In a preferred embodiment said means comprises an external screw-thread on the pilot ring arranged to cooperate in threaded engagement with an internal screw-thread formed within the fluid conduit opening, the external screw-thread leading from one end of the pilot ring to an unthreaded section directly adjacent to the juncture. The minimum weld root thus is defined by the axial length of the unthreaded section of the pilot ring. In order to maintain a minimum acceptable weld root for a given range of valve sizes, the ratio of the radial dimension of the frustoconical face to the axial length of the unthreaded section is maintained between about 2.0 and 4.0. The threaded engagement between the pilot ring and the fluid conduit further serves as a means of temporarily holding the valve at a selected position relative to the fluid conduit, thus further assisting the welder. Additionally, the ratio of the axial length of the unthreaded section to the axial length of the pilot ring preferably is greater than about 0.25.

In another preferred embodiment, said means comprises a spacer ring separable from, and receivable axially on, the pilot ring, the spacer ring being consumable during welding of the male extension to the fluid conduit.

Advantageously, the fluid conduit has an external cylindrical surface, and one side of the spacer ring is shaped to conform to said cylindrical surface. Preferably, the opposite side of the spacer ring is bevelled at an angle corresponding to the angle of the frustoconical face.

Three forms of male-ended valve, each of which is constructed in accordance with the invention, will now be described, by way of example, with reference to Figs. 3 to 5 of the accompanying drawings, in which:-

Fig. 3A is a view similar to Fig. 2 showing the joint produced by the first form of valve and a fluid conduit;

Fig. 3B is a cross-section taken on the line 3B-3B of Fig. 3A;

Figs. 4A and 4B are views similar to Figs. 3A and 3B, and show the joint produced by the second form of valve and a fluid conduit; and

Figs. 5A and 5B are views similar to Figs. 3A and 3B, and show the joint produced by the third form of valve and a fluid conduit.

Referring to the drawings, Figs. 3A and 3B, show a valve of the same type as that shown in Figs. 1 and 2. Accordingly, like reference numerals have been used for like parts, and only the modified parts will be described in detail. Thus, the pilot ring 16 of this embodiment is provided with external screw-threads 32. These threads 32 are adapted to cooperate in threaded engagement with internal screw-threads 34 in the opening 24 in the fluid conduit 26. The threads 32 extend inwardly from the end of the pilot ring 16 for a distance "C", leaving an unthreaded section "R" directly adjacent to the juncture 20 of the pilot ring with the frustoconical face 18. The total length "B" of the pilot ring 16 is thus the sum of "C" and "R", with the dimension "C" being less than the thickness "T" of the conduit wall. This ensures that the end of the pilot ring 16 does not disturb the flow of fluid in the conduit 26. The angle "x" of the frustoconical face 18 is typically about $37.5^{\circ}$.

0068711

The outer diameter "A" of the enlarged portion 22 is selected with regard to the outer diameter "D" of the pilot ring 16 and the length of the valve, so as to ensure that the radial dimension "W" of the frustoconical face 18 provides a weld of adequate strength.

Representative dimensions in inches (millimetres) for valves ranging in size from 0.5" (12.7mm) to 2" (50.8mm) are tabulated below:

| Valve Size | 0.5" (12.7mm) | 0.75" (19.05mm) | 1" (25.4mm) | 1.5" (38.1mm) | 2" (50.8mm) |
|---|---|---|---|---|---|
| A O.D. of enlarged portion | 1.75" (44.45mm) | 1.75" (44.45mm) | 2.00" (50.8mm) | 2.32" (58.93mm) | 2.88" (73.15mm) |
| D O.D. of pilot ring | 0.84" (21.34mm) | 1.05" (26.67mm) | 1.32" (33.53mm) | 1.66" (42.16mm) | 2.38" (60.45mm) |
| W Radial dim. of conical face | 0.45" (11.43mm) | 0.35" (8.89mm) | 0.34" (8.64mm) | 0.33" (8.38mm) | 0.25" (6.35mm) |
| B Axial length of pilot ring | 0.41" (10.41mm) | 0.41" (10.41mm) | 0.47" (11.94mm) | 0.47" (11.94mm) | 0.47" (11.94mm) |
| R Unthreaded section | 0.12" (3.05mm) | 0.12" (3.05mm) | 0.12" (3.05mm) | 0.12" (3.05mm) | 0.12" (3.05mm) |
| C Threaded section | 0.29" (7.37mm) | 0.29" (7.37mm) | 0.35" (8.89mm) | 0.35" (8.89mm) | 0.35" (8.89mm) |
| W/R Weld Ratio | 3.7 | 2.9 | 2.8 | 2.7 | 2.1 |
| R/B Thread Ratio | 0.29 | 0.29 | 0.26 | 0.26 | 0.26 |

Dimensions "R" and "W" establish respectively the minimum weld root and minimum weld depth for each valve size. In order to ensure proper welding, the weld ratio W/R is purposely kep within a range of between about 2.0 and 4.0. Moreover, in order to ensure that the interengagement of the threads 32 and 34 is adequate for the purposes intended, the ratio R/B is also maintained above about 0.25, and below about 0.5.

When installing a valve as modified in accordance with the embodiment of Figs. 3A and 3B, a welder will screw the pilot ring 16 into the fluid conduit opening 24. The extent of penetration or insertion need only be that which is sufficient to provide temporary support for the valve at the desired angle while welding takes place. Penetration will be limited to the axial length "C" of the threaded section, thus always ensuring that a minimum weld root "R" remains.

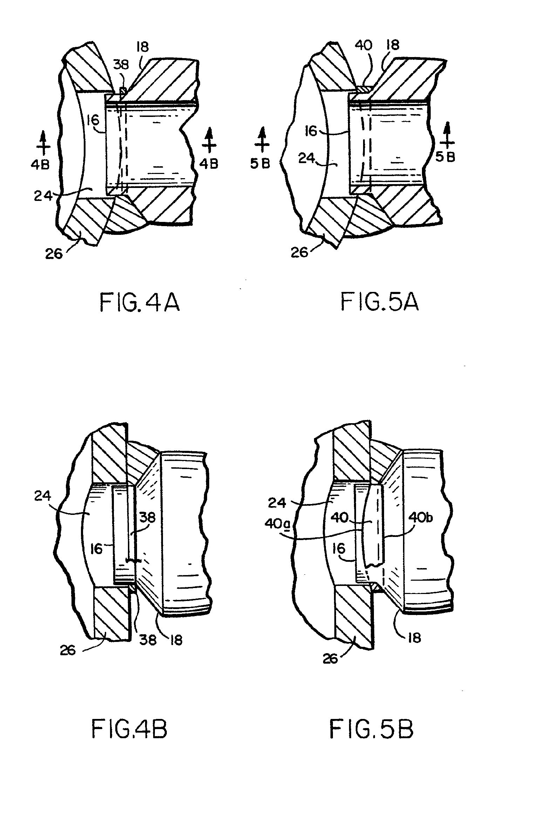

Figs. 4A and 4B also show a valve of the same type as that shown in Figs. 1 and 2. Accordingly, like reference numerals have been used for like parts, and only the modified parts will be described in detail. In this embodiment, the degree of insertion of the pilot ring 16 into the fluid conduit opening 24 is limited by a spacer ring 38. The spacer ring 38 is separable from, and axially received on, the pilot ring 16. The spacer ring 38 is consumed during welding, and its axial length defines the minimum weld root by virtue of its engagement between the outer surface of the conduit 26 and the frustoconical face 18.

Figs. 5A and 5B also show a valve of the same type as that shown in Figs. 1 and 2. Accordingly, like reference numerals have been used for like parts, and only the modified parts will be described in detail. In this embodiment, the degree of insertion of the pilot ring 16 into the fluid conduit opening 24 is limited by a spacer ring 40. The spacer ring 40 has one end 40a configured to fit snugly against the cylindrical outer surface of the conduit 26, and has its opposite end 40b bevelled to fit snugly against the frustoconical face 18. Here again, the spacer ring 40 is consumed during the welding operation.

It will be apparent that the three forms of valve described above are such that a welder is provided with a reliable self-limiting means for ensuring that a minimum weld ‘root is always present during the welding operation. Moreover, in the embodiment of Figs. 3A and 3B, the self-limiting means also holds the valve in place, thus further assisting the welder.

CLAIMS:-

1. A valve comprising a body (10) having a male extension (12) with a pilot ring (16) protruding axially from the end thereof, the pilot ring (16) being adapted for insertion into an opening (24) in a fluid conduit (26) to which the male extension (12) is to be attached by welding, and the male extension (12) being provided with an outer frustoconical face (18) leading from a juncture (20) with the pilot ring (16) to an enlarged portion (22) of the male extension (12),said enlarged portion (22) having an outer diameter greater than that of the pilot ring (16), characterised in that the pilot ring (16) is provided with means (32, 38 or 40) for limiting the permissible extent of insertion thereof into the fluid conduit opening (24), said means (32, 38 or 40) being so arranged in relation to the frustoconical face (18) as to ensure that the juncture (20) is spaced axially from the fluid conduit (26) when the pilot ring (16) is inserted into the fluid conduit opening (24).

2. A valve as claimed in claim 1,characterised in that said means comprises an external screw-thread (32) on the pilot ring (16) arranged to cooperate in threaded engagement with an internal screw-thread (34) formed within the fluid conduit opening (24), the external screw-thread (32) leading from the end of the pilot ring (16) to an unthreaded section directly adjacent to the juncture (20).

3. A valve as claimed in claim 2, characterised in that the ratio of the radial dimension (W) of the frustoconical face (18) to the axial length (R) of the unthreaded section of the pilot ring (16) is between about 2.0 and 4.0.

4.  A valve as claimed in claim 2 or claim 3,
characterised in that the ratio of the axial length
(R) of the unthreaded section of the pilot ring (16)
to the axial length (B) of the pilot ring (16) is
greater than about 0.25.

5.  A valve as claimed in claim 1, characterised
in that said means comprises a spacer ring (38 or
40) separable from, and receivable axially on, the
pilot ring (16), the spacer ring (38 or 40) being
consumable during welding of the male extension (12)
to the fluid conduit (26).

6.  A valve as claimed in claim 5, characterised in
that the fluid conduit (26) has an external cylindrical
surface, and one side (40a) of  the spacer ring (40) is
shaped to conform to said cylindrical surface.

7.  A valve as claimed in claim 6, characterised in
that the opposite side (40b) of the spacer ring (40)
is bevelled at an angle corresponding to the angle of
the frustoconical face (18).

0068711

FIG.2 PRIOR ART

FIG.I PRIOR ART

FIG.3A

FIG.3B

FIG.4A

FIG.5A

FIG.4B

FIG.5B